# EUROPÄISCHE PATENTSCHRIFT

(11) **EP 1 864 834 B1**
(45) Veröffentlichungstag und Bekanntmachung des Hinweises auf die Patenterteilung: **23.06.2010**
(21) Anmeldenummer: 07010428.6
(22) Anmeldetag: 25.05.2007
(51) Int. Cl.: B60D 5/00, B61D 17/20, B62D 47/02

(54) **Aus mehreren Fahrzeugteilen kuppelbares Gelenkfahrzeug**
Articulated vehicle composed of several coupled vehicle sections
Véhicule articulé pouvant être couplé à plusieurs accessoires automobiles

(30) Priorität: 09.06.2006 DE 202006009083 U; 19.09.2006 DE 202006014539 U
(43) Veröffentlichungstag der Anmeldung: 12.12.2007
(73) Patentinhaber: Hübner GmbH, 34123 Kassel (DE)
(72) Erfinder: Karasek, Jens, 34260 Kaufungen (DE); Koch, Robert, 37242 Bad Sooden-Allendorf (DE); Scharf, Lothar, 37272 Bad Sooden-Allendorf (DE)
(74) Vertreter: Walther, Walther & Hinz GbR

(56) Entgegenhaltungen:
- EP-A- 0 038 082
- EP-A1- 0 567 950
- WO-A-95/06580
- WO-A-97/42045
- WO-A-03/106238
- DE-A1- 3 340 446
- DE-A1- 3 407 327
- GB-A- 2 009 691
- US-A- 4 765 249

## Beschreibung

Die vorliegende Erfindung betrifft ein aus mehreren Fahrzeugteilen kuppelbares Gelenkfahrzeug, wobei jedes Fahrzeugteil mindestens zwei Achsen und einen Kuppelrahmen aufweist, der durch einen Balg mit dem Fahrzeugteil verbunden ist, wobei zwischen Fahrzeugteil und Kuppelrahmen jeweils eine Gelenkeinrichtung vorgesehen ist, wobei die Gelenkeinrichtung einen Kupplungsträger aufweist, der sich in etwa in der Ebene des Kupplungsrahmens befindet, wobei der Kupplungsträger zumindest Kupplungsmittel zur Kupplung mit der Gelenkeinrichtung des anderen Fahrzeugteils aufweist, wobei die Gelenkeinrichtung mehrere Lager umfasst, wobei jedes Lager eine Bewegung in mindestens eine Raumrichtung ermöglicht, wobei die Lager miteinander in Verbindung stehen, wobei am Chassis des Fahrzeugs ein Wankgelenk mit einer parallel zur Fahrzeuglängsachse verlaufenden Achse angeordnet ist.

Gegenstand der gattungabildenden GB 2 009 691 A ist - wie sich dies aus den Figuren aber auch aus der Beschreibung zu dieser Literaturstelle ergibt - in welcher Weise ein Übergangsboden oder die Plattform zwischen zwei Fahrzeugen, die das Hinüberwechseln der Passagiere zwischen den beiden Fahrzeugen ermöglicht, an den Wagenkästen angelenkt ist, um auch dem Boden oder der Plattform zu ermöglichen, den Fahrbewegungen des Fahrzeugs, also insbesondere den beim Fahren auftretenden Wank-, Nick- und Knickbewegungen nachgeben zu können. Darüber hinaus zeigt diese Literaturstelle eine Anbindung des Kuppelgliedes zur Verbindung der Fahrzeugteile an dem jeweiligen Fahrzeugteil durch ein Gelenk, das in alle drei Raumrichtungen beweglich ist.

Ein aus mehreren Teilen kuppelbares Gelenkfahrzeug ist aus dem Stand der Technik hinreichend bekannt (EP 1531117). So sind insbesondere solche Gelenkfahrzeuge bekannt, bei denen ein Anhängerteil angekuppelt werden kann, wobei das Anhängerteil mit dem Zugfahrzeug durch einen Übergang verbunden ist, so dass Personen von einem Fahrzeugteil in das andere Fahrzeugteil hinüberwechseln können. Mit einem solchen kuppelbaren Gelenkfahrzeug wird der Tatsache Rechnung getragen, dass z. B. Busse zu bestimmten Zeiten höher frequentiert sind als zu anderen Zeiten. Das heißt, dass durch ein solches Gelenkfahrzeug, bei dem der Hänger kuppelbar mit dem Zugfahrzeug verbindbar ist, eine Anpassung an die jeweils erforderlichen Transportkapazitäten erfolgen kann.

Darüber hinaus sind bei Bussen auch sogenannte Doppelgelenkzüge bekannt, die eine Transportkapazität von weit mehr als 250 Personen aufweisen. Bei diesen Gelenkzügen sind die einzelnen Wagenteile nicht in dem Sinne miteinander kuppelbar, dass durch Kuppeln einzelner Fahrzeugteile die Transportkapazität an die jeweils vorhandenen Erfordernisse anpassbar wäre. Nachteilig an einem solchen Doppelgelenkfahrzeug ist insbesondere auch, dass solche Fahrzeuge einen relativ großen Wendekreis haben, wenn die hinteren Achsen nicht lenkbar ausgestaltet sind.

Darüber hinaus sind Straßenbahnzüge bekannt, die aus einzelnen Wagenteilen bestehen, die allerdings auch fest miteinander verbunden sind, wobei in diesem Zusammenhang unter dem Begriff "fest" zu verstehen ist, dass solche Straßenbahnzüge nicht in ihrer Transportkapazität an die jeweils vorherrschenden Verhältnisse anpassbar sind.

Nachteilig bei Straßenbahnzügen ist insbesondere auch, dass die Infrastruktur für den Betrieb einer Straßenbahn, nämlich insbesondere das Verlegen von Schienen und Oberleitungen, mit nicht unerheblichen Kosten verbunden ist. Das heißt, der Betrieb von Straßenbahnen ist relativ teuer, gleichwohl der Betrieb von Straßenbahnen auch umweltschonend ist. Der Betrieb von Bussen hingegen, die auf öffentlichen Straßen fahren, ist auf Grund der nicht erforderlichen gesonderten Infrastruktur wesentlich preiswerter. Vorteilhaft bei Straßenbahnen ist insbesondere auch, dass diese als sogenannte "Zwei-Richtungs-Fahrzeuge" fungieren können.

Der Erfindung liegt daher die Aufgabe zu Grunde, ein aus mehreren Fahrzeugteilen kuppelbares Gelenkfahrzeug für den Straßenverkehr bereitzustellen, das die Vorteile von Straßenbahnzügen und die Vorzüge von Gelenkbussen, insbesondere hinsichtlich solcher Gelenkbusse, deren Fahrzeugteile miteinander im Sinne einer Anpassung an die erforderliche Transportkapazität kuppelbar sind, miteinander kombiniert, wobei zusätzlich sichergestellt sein soll, dass eine Drehung der Übergangsplattform, bei Windlast auf den Übergang oder bei exzentrisch auf der Plattform aufstehenden Personen, verhindert wird.

Die Aufgabe wird erfindungsgemäß dadurch gelöst, dass das Wankgelenk ein Drehglied aufweist, das im Wankgelenkgehäuse um einen vorgegebenen Drehwinkel in einem Elastomerkörper entgegen einer Kraft drehbar gelagert ist. Hieraus wird zum einen deutlich, dass die Fahrzeugteile, die miteinander kuppelbar sind, im Bereich der Kupplung identisch ausgebildet sind. Das bedeutet, dass auf Grund der Symmetrie jedes Fahrzeugteil beliebig mit jedem anderen Fahrzeugteil kuppelbar ist, woraus sich eine enorme Variationsbreite durch Verbindung einzelner Fahrzeugteile ergibt.

So ist beispielsweise denkbar, zwei selbstständig fahrbare Busse, also Busse mit jeweils zwei Achsen, miteinander zu kuppeln, um in solcherweise ein sogenanntes "Zwei-Richtungs-Fahrzeug" zu erhalten. Denkbar ist ebenfalls, zwischen zwei solchermaßen aktive Fahrzeugteile ein drittes passives Fahrzeugteil, beispielsweise in Form eines Anhängers auch mit zwei Achsen, zu setzen. Ein solchermaßen ausgebildetes Gelenkfahrzeug in Form eines Busses hat insofern bereits große Ähnlichkeit mit einem Straßenbahnzug, abgesehen von der Tatsache, dass ein solcher Gelenkzug keine Schienen benötigt, sondern auf üblichen Straßen fahren kann. Insbesondere benötigt ein solches Gelenkfahrzeug, das eine Länge von bis zu 50 m aufweisen kann, an der jeweiligen Endhaltestelle keinen sogenannten "Wendehammer", der einen erheblichen Platzbedarf hat, sondern es reicht vielmehr aus, wenn der Fahrzeugführer von dem einen Busteil in das andere Busteil überwechselt, da es sich hierbei um ein sogenanntes "Zwei-Richtungs-Fahrzeug" handelt, wenn zu jeder Seite des Fahrzeugs ein im Wesentlichen selbstständiger Bus im Sinne eines aktiven Fahrzeugs gekuppelt ist. Die Kapazitätsanpassung erfolgt nun dadurch, dass bis auf ein eventuelles Hängermittelteil als passives Fahrzeugteil die beiden aktiven Fahrzeugteile jeweils im Solobetrieb gefahren werden können. Das heißt, mit einem solchen Gelenkfahrzeug werden die Vorteile einer Straßenbahn mit denen eines Gelenkbusses kombiniert, wobei zusätzlich eine Kapazitätsanpassung möglich ist.

Bekanntermaßen werden Gelenkzüge den verschiedensten Bewegungsarten unterworfen. So müssen die Gelenke in der Lage sein, sowohl Wank-, Nick- als auch Knickbewegungen aufzunehmen. Unter Wankbewegungen versteht man solche Bewegungen, bei denen sich die beiden Fahrzeugteile relativ zueinander um die Längsachse verdrehen, Knickbewegungen sind solche, die auftreten, wenn der Gelenkzug mit den beiden Fahrzeugteilen um eine Kurve fährt, wohingegen Nickbewegungen entstehen, wenn ein solcher Gelenkzug durch eine Senke oder über eine Kuppe fährt.

Bislang ist man davon ausgegangen, dass aufgrund der Eigenelastizität des Chassis des jeweiligen Fahrzeugteiles die Wankbewegungen von dem Chassis selbst aufgenommen werden. Es hat sich zwischenzeitlich allerdings herausgestellt, dass selbst bei bereits verhältnismäßig geringen Wankwinkeln Momente von bis zu 30 KNm auf das Gelenk bzw. auch auf die Chassis wirken. Insofern sind Beschädigungen an Chassis und/oder Gelenken nicht auszuschließen.

Um nunmehr die auf das Chassis und/oder das Gelenk wirkenden Momente aufgrund von Wankbewegungen zu reduzieren, umfasst die Gelenkeinrichtung mehrere Lager, wobei jedes Lager eine Bewegung in mindestens einer unterschiedlichen Raumrichtung ermöglicht, wobei die Lager miteinander in Verbindung stehen. Wenn demzufolge jeweils ein Lager für jeweils eine Raumrichtung vorhanden ist, um die entsprechenden Bewegungen aufzunehmen, dann tritt naturgemäß eine Entlastung sowohl des Gelenkes als auch der Chassis der Fahrzeugteile ein.

Im Einzelnen ist insofern vorgesehen, dass am Kupplungsträger ein Knickgelenk mit einer vertikalen Achse angeordnet ist, am Chassis des Fahrzeugteils mindestens ein Nickgelenk mit einer parallel zur Fahrzeugquerachse verlaufenden Nickachse und am Chassis des Fahrzeugteils ein Wankgelenk mit einer parallel zur Fahrzeuglängsachse verlaufenden Achse. Das Nickgelenk ist hierbei als Gleitlager ausgebildet. Insbesondere bei einem Gelenkzug, bei dem beide Fahrzeugteile jeweils zwei Achsen aufweisen, können durch eine solchermaßen gestaltete Konstruktion die sowohl auf das Gelenk als auch auf die Chassis der Fahrzeugteile wirkenden Kräfte und Momente in für das Material erträglichen Grenzen gehalten werden.

Im Einzelnen ist vorgesehen, dass das Nickgelenk das Wankgelenk aufnimmt. Eine Kombination sowohl des Nickgelenkes als auch des Wankgelenkes in einer Einheit hat den Vorteil einer platzsparenden Bauweise, selbst wenn das Gelenk als solches keine kombinierte Nick- und Wankbewegung zulässt, sondern einzelne Gelenkteile in diesem Sinne miteinander kombiniert sind.

Im Einzelnen zeigt das Wankgelenk ein Wankgelenkgehäuse, wobei das Nickgelenk am Wankgelenkgehäuse angreift. Zur Verbindung des Wankgelenkgehäuses mit dem Nickgelenk ist das Wankgelenkgehäuse mit zwei seitlich abgehenden Nickachsstummeln versehen, wobei diese Nickachsstummel Teil des Nickgelenkes sind. Das Wankgelenk umfasst ein Drehglied, das in dem Wankgelenkgehäuse um einen vorgebbaren Drehwinkel drehbar gelagert ist. In diesem Zusammenhang ist auf Folgendes hinzuweisen:

Um Personen den Übertritt zwischen den beiden gelenkig miteinander verbundenen Fahrzeugteilen zu ermöglichen, ist insbesondere eine Übergangsbrücke oder Übergangsplattform vorgesehen, wobei die Übergangsplattform einen Drehteller aufweist. Die beiden miteinander kuppelbaren Fahrzeugteile sind im Bereich eines jeweiligen Kupplungsträgers miteinander verbunden. Eine jede Gelenkeinrichtung ist einerseits am Chassis und andererseits an diesem vorgenannten Kupplungsträger befestigt, mit dem schlussendlich die beiden Fahrzeugteile miteinander kuppelbar sind. Die Übergangsplattform überspannt nunmehr die beiden Gelenkeinrichtungen samt den sie verbindenden Kupplungsträgern. Aufgrund des Wanklagers, das eine Drehbewegung der damit verbundenen Teile um die Längsachse des Fahrzeugs ermöglicht, ist nun sicherzustellen, dass sich die über die beiden Gelenkeinrichtungen erstreckende Übergangsplattform nicht in der Drehachse des Wankgelenkes dreht. Insofern sind erfindungsgemäß Mittel vorgesehen, die eine solche Rotation der Übergangsplattform, mithin der zwischen den beiden einander gegenüberliegenden Wankgelenke angeordneten Bauteile, verhindern. Insofern ist vorgesehen, dass das Drehglied entgegen einer Kraft in dem Wankgelenkgehäuse in einem Elastomerkörper drehbar gelagert ist. Das bedeutet, dass bereits bei geringen Winkeln ein relativ großes Moment auftritt, das bei größeren Winkeln nicht wesentlich zunimmt. Das maximale Moment wird durch geeignete Maßnahmen auf einen festgelegten Wert begrenzt. Hierdurch wird der Tatsache Rechnung getragen, dass nicht allein durch Windlasten bzw. exzentrisch auf der Übergangsplattform aufstehenden Personen eine Drehung der Übergangsplattform stattfinden soll.

Weitere vorteilhafte Merkmale sind den Unteransprüchen zu entnehmen.

Nach einem weiteren Merkmal der Erfindung ist das Wankgelenk mit dem Knickgelenk durch einen sogenannten Gelenkträger verbunden. Der Gelenkträger weist hierbei vorzugsweise ein Dämpfungselement auf, das mit dem Kupplungsträger verbunden ist und das eine Dämpfung der Bewegung der Gelenkeinrichtung z. B. bei Kurvenfahrt vornimmt, wie dies an sich bereits bekannt ist.

Gegenstand der Erfindung ist weiterhin die Verbindung der beiden Gelenkeinrichtungen durch die Kupplungsträger, die Kupplungsmittel zum Kuppeln der Fahrzeugteile aufweisen.

So ist insbesondere vorgesehen, dass sich die Kupplungsmittel im Bereich der Mittellängsachse des Gelenkfahrzeugs an dem Kupplungsträger befinden. Die Kupplungsmittel sind hierbei männliche und weibliche Kuppelglieder, die zu beiden Seiten der Mittellängsachse des Gelenkfahrzeugs an dem Kupplungsträger angeordnet sind, was bedeutet, dass die Anordnung symmetrisch ist.

Des Weiteren ist vorgesehen, dass zu beiden Seiten der Kupplungsmittel an dem Kupplungsträger weitere weibliche und männliche Kupplungsglieder für Strom-, Druckluft- und/oder Hydraulikleitungen vorgesehen sind, um Energie und auch Daten von dem angetriebenen Fahrzeug zu den anderen passiven Fahrzeugteilen zu transportieren.

Nach einem weiteren vorteilhaften Merkmal ist vorgesehen, dass der Wagenteil im Bereich des Bodens eine Einschuböffnung zur Aufnahme des Gelenks aufweist. Das heißt, dass die Gelenkeinrichtung in den Wagenboden zumindest partiell einschiebbar ist, wobei die Einschiebtiefe der Gelenkeinrichtung im Wesentlichen durch die maximale Komprimierbarkeit des Balges und die Stärke des Kuppelrahmens bestimmt ist. In diesem Zusammenhang ist ein Einschubrahmen in jeder Einschuböffnung eines Fahrzeugteils angeordnet, der die jeweilige Gelenkeinrichtung aufnimmt.

Nach einem weiteren, besonders vorteilhaften Merkmal der Erfindung weist der Kuppelrahmen einen den Kuppelrahmen umlaufend umgebenden Montagerahmen auf, der der Befestigung des Balges dient. Das heißt, dass dieser Montagerahmen eine äußere Kontur aufweist, die im Wesentlichen der Kontur des Balges oder auch der Kontur des Wagen- oder Fahrzeugteils entspricht. Bereits an anderer Stelle wurde dargelegt, dass der Kupplungsträger männliche und weibliche Kupplungsglieder für Strom-, Druckluft- und/oder Hydraulikleitungen aufweist. Denkbar ist nach einer Variante, dass der Montagerahmen im Dachbereich des Balges in der Mittellängsachse des Gelenkfahrzeugs männliche und weibliche Kupplungsglieder für Strom-, Druckluft- und/oder Hydraulikleitungen besitzt, wobei die Verteilung der Kupplungsglieder symmetrisch zur Mittellängsachse des Fahrzeugs erfolgen muss. Die symmetrische Anordnung der Kupplungsglieder ist Voraussetzung dafür, dass die einzelnen Wagenteile, also sowohl die passiven als auch die aktiven Wagenteile, beliebig miteinander kuppelbar sind. Erst dadurch eröffnet sich die gewünschte große Variationsbreite in der praktischen Anwendung, insbesondere im Hinblick auf die gewünschte Anpassung der Transportkapazitäten.

Um im entkuppelten Zustand der einzelnen Fahrzeugteile dafür zu sorgen, dass die stirnseitige Öffnung verschlossen werden kann, sind Mittel zum Verschließen der Öffnung vorgesehen, wobei hierbei verschiedene Ausführungsformen zum Verschließen der Öffnung der Stirnseite des Fahrzeugs denkbar sind. So ist zum einen denkbar, bei eingezogenem Balg, also entsprechend auch bei eingeschobenem Gelenk, das gesamte hintere Wagenteil durch ein Rollo abzudecken bzw. es besteht die Möglichkeit, das Heck eines solchen Fahrzeuges mit einer Haube abzudecken.

Anhand der Zeichnungen wird die Erfindung nachstehend beispielhaft näher erläutert.
- Figur 1: zeigt ein Gelenkfahrzeug mit zwei aktiven Fahrzeugteilen;
- Figur 2: zeigt ein Gelenkfahrzeug mit zwei aktiven Fahrzeugteilen, zwischen denen ein passives Fahrzeugteil angeordnet ist;
- Figur 3: zeigt die Einzelheit x aus Figur 2 in einer Seitenansicht;
- Figur 4: zeigt die Einzelheit y aus Figur 3 in einer perspektivischen Darstellung von unten gesehen;
- Figur 5: zeigt die Einzelheit y aus Figur 3 in einer perspektivischen Ansicht von oben;
- Figur 6: zeigt den Ausschnitt z gemäß Figur 5 in vergrößerter Darstellung;
- Figur 7: zeigt in isometrischer Darstellung die Verbindung zweier Fahrzeugteile durch zwei Gelenkeinrichtungen, die durch Kupplungsträger miteinander kuppelbar sind, wobei der eine rechte Fahrzeugteil weggelassen ist;
- Figur 7a: zeigt schematisch einen Schnitt durch das Nick- und Wankgelenk.

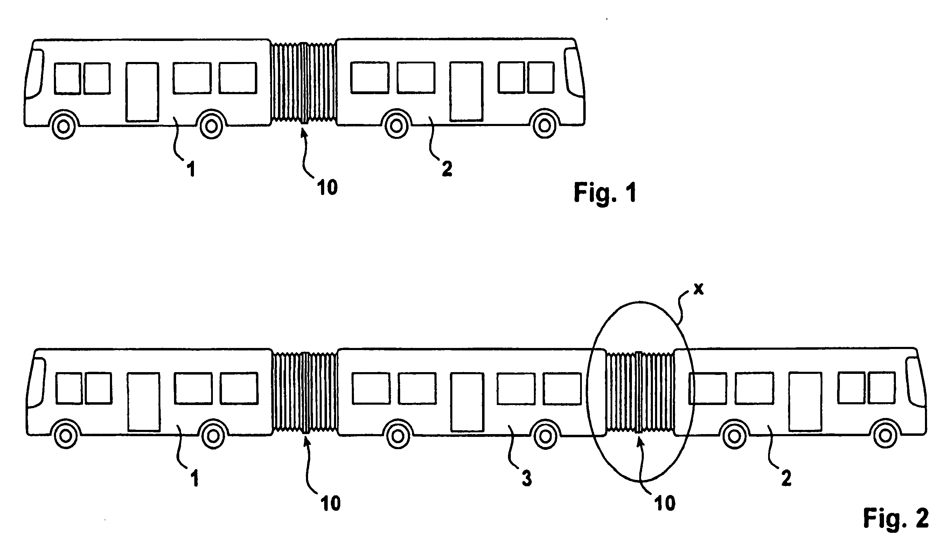

Ein Gelenkfahrzeug gemäß Figur 1 besteht aus zwei aktiven Fahrzeugen 1 und 2, die durch eine Verbindungseinrichtung 10 miteinander verbindbar sind. Unter einem aktiven Fahrzeugteil wird hierbei ein Fahrzeugteil mit zwei Achsen verstanden, das selbstständig am Straßenverkehr teilnehmen kann, da es insbesondere über einen selbstständigen Antrieb und über einen eigenständigen Führerstand verfügt.

Bei der Ausführungsform gemäß Figur 2 sind aktive Fahrzeugteile 1 und 2 vorgesehen, zwischen denen ein drittes, allerdings passives Fahrzeugteil 3 allerdings ebenfalls mit zwei Achsen, angeordnet ist, wobei die einzelnen Fahrzeugteile untereinander wiederum durch Verbindungseinrichtungen 10 miteinander in Verbindung stehen.

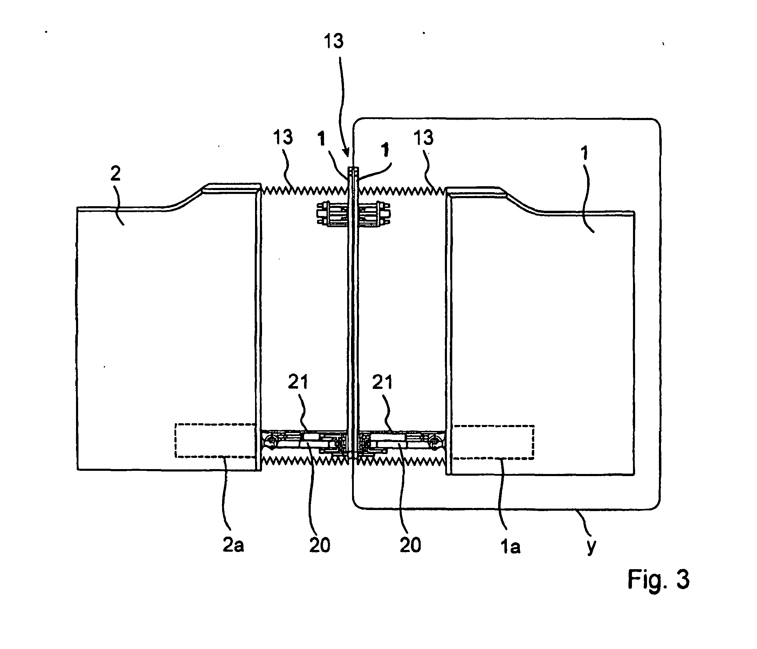

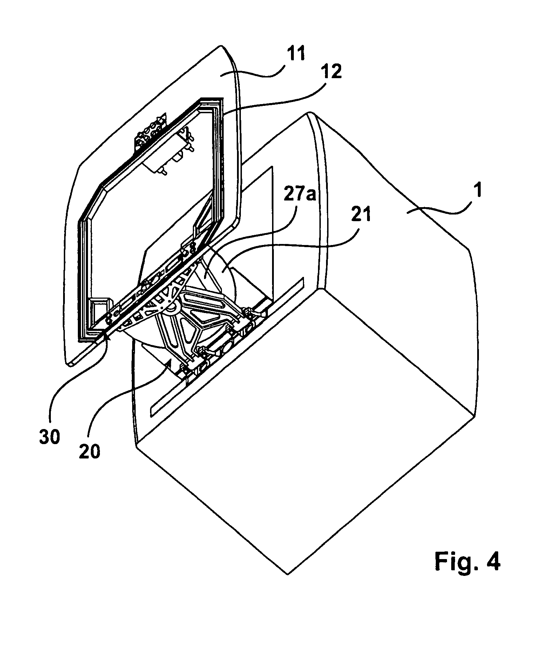

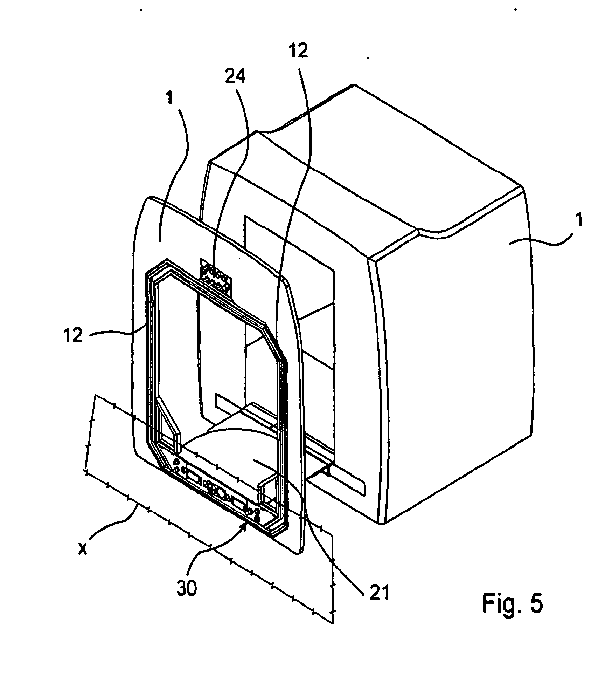

Eine solche Verbindungseinrichtung 10 ergibt sich aus der Darstellung gemäß Figur 3. Die Verbindungseinrichtung 10 umfasst die beiden Montagerahmen 11 sowie den innerhalb der jeweiligen Montagerahmen 11 angeordneten Kuppelrahmen 12, wie sich dies aus der Darstellung Figur 4 und Figur 5 ergibt. Die Montagerahmen 11 weisen jeweils einen Balg 13 auf, der am anderen Ende mit dem Fahrzeugteil verbunden ist. Die beiden Fahrzeugteile 1 und 2 zeigen darüber hinaus jeweils eine Gelenkeinrichtung 20, wobei sich über der jeweiligen Gelenkeinrichtung 20 eine Plattform 21 befindet.

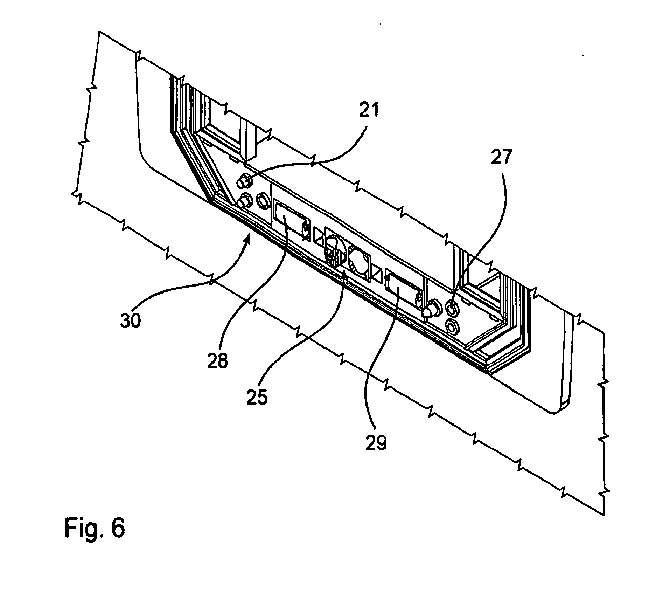

Die weiteren Einzelheiten der Ausgestaltung einer Verbindung zwischen dem jeweiligen Wagenteil und dem Montagerahmen ergeben sich insbesondere in Ansehung der Figuren 4 und 5. Der Kuppelrahmen 12 nimmt, wie bereits ausgeführt, den Montagerahmen 11 auf. Der Kuppelrahmen 12 weist im Bereich der Gelenkeinrichtung 20 den Kupplungsträger 31 auf (Fig. 5, Fig. 6), wobei der Kupplungsträger 30 einerseits die Kupplungsmittel 25 zur mechanischen Verbindung der beiden Fahrzeuge untereinander aufweist und andererseits zu beiden Seiten der Mittellängsachse des Fahrzeugs weitere Kuppelglieder, so insbesondere männliche und weibliche Kuppelglieder 26, 27 sowie eine Elektrokupplung 28, 29, wobei an dieser Stelle noch einmal darauf hingewiesen wird, dass die Kuppelglieder zu einer Seite der Mittellängsachse des Gelenkfahrzeuges entweder männlich oder weiblich ausgebildet sind. Auch die mechanische Kupplung zur Verbindung der beiden Fahrzeugteile untereinander ist im Übrigen mit männlichen und weiblichen Kuppelgliedern zur jeweiligen Seite der Mittellängsachse des Fahrzeugs angeordnet, wobei sich hier der Einsatz einer "Scharfenbergkupplung®" anbietet. Derartige Kupplungen weisen jeweils Kegel und Trichter mit den entsprechenden Kupplungsgliedern auf. Im Deckenbereich des Kuppelrahmens 12 sind weitere Versorgungskupplungen 24 vorgesehen, die wiederum so zu beiden Seiten der Mittellängsachse des Fahrzeugs angeordnet sind, dass beim Kuppeln die Kupplungselemente beider Fahrzeuge zueinander korrespondieren. Die Gelenkeinrichtung 20 weist einen Dämpfer 27a auf, der einerseits mit dem Kupplungsträger 30 und andererseits mit der Gelenkeinrichtung verbunden ist.

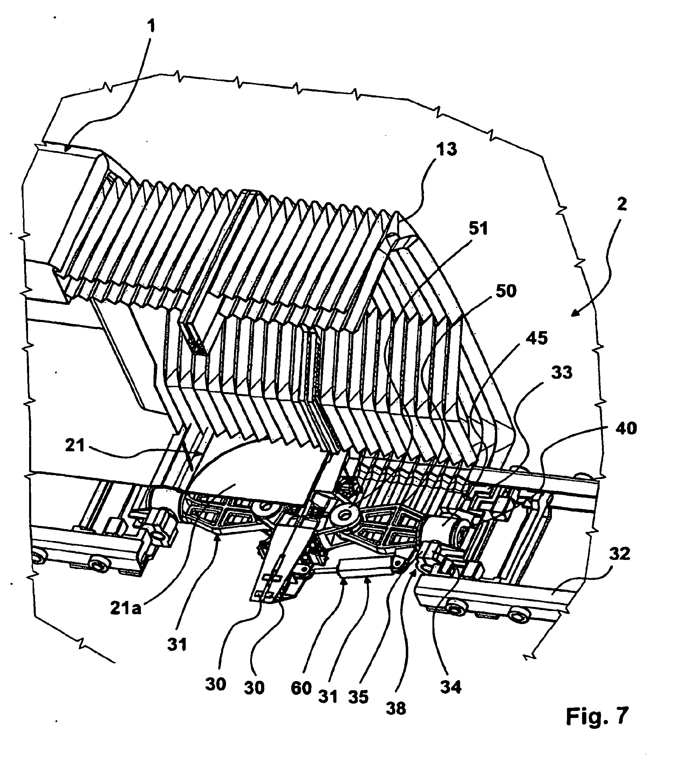

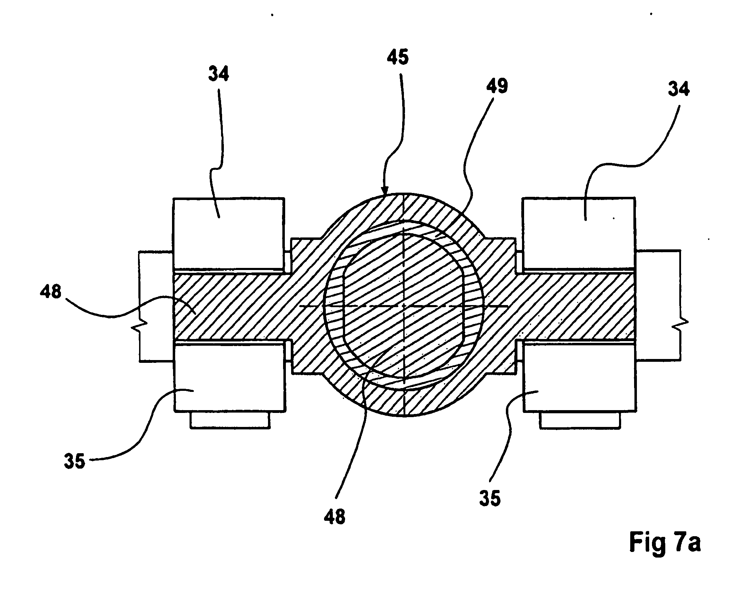

Bei der Darstellung gemäß Fig. 7 sind zwei Gelenkeinrichtungen 31 vorgesehen, durch die die beiden Kupplungsträger 30 miteinander verbunden sind. In den Fahrzeugteilen (nicht darstellt) sind Einschuböffnungen vorgesehen, die die Einschubrahmen 32 aufnehmen. Die Einschubrahmen 32 nehmen schlussendlich die jeweilige Gelenkeinrichtung 31 auf. Hierzu weist der Einschubrahmen 32 einen Rahmen 33 auf, wobei der Rahmen 33 jeweils ein Teil einer Manschette 34 aufweist, das in Verbindung mit einem zweiten Teil 35 der Manschette den Nickachsstummel 41 des Nicklagers 38 als sogenanntes Gleitlager aufnimmt. D. h. die Nickachsstummel gleiten in der durch die Manschette gebildeten Öffnung. Diese Nickachsstummel 41 sind weiterhin an dem Wankgelenkgehäuse 45 des Wankgelenkes 40 an beiden Seiten angeordnet, und sorgen dafür, dass das Fahrzeug bei Durchfahren von Senken oder Überfahren von Kuppen den entsprechenden Bewegungen nachgeben kann, wie dies an sich bekannt ist.

Wie bereits ausgeführt, befinden sich an dem Wankgelenkgehäuse 45 die beiden Achsstummel 41. Im Gehäuse 45 des Wankgelenkes ist das Drehglied 48 ebenfalls in einem Elastomermantel 49 befestigt, wobei die Anordnung des als Vielkant (Figur 7a) ausgebildeten Drehgliedes in dem Elastomermantel derart ist, dass bis zu einem bestimmten Drehmoment das Drehglied zwar um die Rotationsachse beweglich ist, bei Überschreiten eines bestimmten Wertes dieses Wanklager den einwirkenden Kräften allerdings nachgibt, um so Beschädigungen an dem Chassis oder dem Gelenk zu vermeiden. Für einen solchen Fall könnte z. B. vorgesehen sein, dass der Gummimantel 49 des Wanklagers zerstört wird und insofern das Drehglied zwar noch nicht völlig momentenlos, aber sich doch im Wankgelenkgehäuse bewegen kann. Das Drehglied 48 weist den Gelenkträger 50 auf, der durch ein Knickgelenk 51 mit dem Kupplungsträger 30 verbunden ist. Wesentlich ist, dass aufgrund der konstruktiven Gestaltung bzw. insbesondere der bloßen Anordnung eines Wankgelenkes als Bestandteil der Gelenkeinrichtung dieses Knicklager 51 nur geringfügige Lasten aufgrund von auftretenden Wankbewegungen aufnehmen muss. Insofern kann das Knickgelenk 51 relativ einfach ausgebildet sein.

Der Gelenkträger 50 umfasst darüber hinaus ein Dämpfungselement 60, das einerseits am Gelenkrahmen und andererseits am Kupplungsträger 30 angeordnet ist.

Oberhalb der Gelenkeinrichtung 31 und auch der Kupplungsträger 30 befindet sich die mit 21 bezeichnete Übergangsplattform mit dem Drehteller 21 a. Der Drehteller 21 a ist in der Verbindung zwischen den beiden Kupplungsträgern 30 geteilt, so dass auch die Übergangsplattform geteilt jedem Fahrzeugteil zuordbar ist. Der Drehteller 21 a ist einerseits auf dem Kupplungsträger 30 gelagert, aber auch durch Arme (nicht dargestellt), die am Gelenkträger 50 angeordnet sind, gehalten.

Die Fahrzeugteile 1 und 2 zeigen darüber hinaus Einschuböffnungen 1a und 2a, die der Aufnahme sowohl der Gelenkeinrichtung 20, 31 als auch der Plattform 21 dienen, wenn nämlich der Montagerahmen 11 samt Balg 13 an das Fahrzeug herangezogen wird. Das Heck des Fahrzeuges bzw. die stirnseitige Öffnung des Fahrzeuges ist verschließbar, beispielsweise durch ein Rollo (nicht dargestellt).

Es wird an dieser Stelle noch einmal darauf hingewiesen, dass die Fahrzeuge im Hinblick auf ihre stirnseitige Ausbildung im Kuppelbereich identisch sind, dass also alle Teile doppelt vorhanden sind. Nur hierdurch ergibt sich die gewünschte erforderliche Variationsvielfalt.

## Patentansprüche

1. Aus mehreren Fahrzeugteilen (1, 2) kuppelbares Gelenkfahrzeug, wobei jedes Fahrzeugteil (1, 2) mindestens zwei Achsen und einen Kuppelrahmen (12) aufweist, der durch einen Balg (13) mit dem Fahrzeugteil (1, 2) verbunden ist, wobei zwischen Fahrzeugteil (1, 2) und Kuppelrahmen (12) jeweils eine Gelenkeinrichtung (20, 31) vorgesehen ist, wobei die Gelenkeinrichtung (20, 31) einen Kupplungsträger (30) aufweist, der sich in etwa in der Ebene des Kuppelrahmens (12) befindet, wobei der Kupplungsträger (30) zumindest Kupplungsmittel (25) zur Kupplung mit der Gelenkeinrichtung (20, 31) des anderen Fahrzeugteils (1, 2) aufweist, wobei
die Gelenkeinrichtung (31) mehrere Lager (38, 40, 51) umfasst, wobei jedes Lager eine Bewegung in mindestens eine Raumrichtung ermöglicht, wobei die Lager (38, 40, 51) miteinander in Verbindung stehen, wobei am Chassis des Fahrzeugs (1, 2) ein Wankgelenk (40) mit
einer parallel zur Fahrzeuglängsachse verlaufenden Achse angeordnet ist, **dadurch gekennzeichnet, dass** das Wankgelenk (40) ein Drehglied (48) aufweist, das im Wankgelenkgehäuse (45) um einen vorgegebenen Drehwinkel in einem. Elastomerkörper (49) entgegen einer Kraft drehbar gelagert ist.

2. Aus mehreren Fahrzeugteilen kuppelbares Gelenkfahrzeug nach Anspruch 1,
**dadurch gekennzeichnet,**
**dass** am Kupplungsträger (30) ein Knickgelenk (51) mit einer vertikalen Achse angeordnet ist.

3. Aus mehreren Fahrzeugteilen kuppelbares Gelenkfahrzeug nach einem oder mehreren der voranstehenden Ansprüche,
**dadurch gekennzeichnet,**
**dass** am Chassis des Fahrzeugteiles (1, 2) mindestens ein Nickgelenk (38) mit einer parallel zur Fahrzeugquerachse verlaufenden Nickachse vorgesehen ist.

4. Aus mehreren Fahrzeugteilen kuppelbares Gelenkfahrzeug nach einem oder mehreren der voranstehenden Ansprüche,
**dadurch gekennzeichnet,**
**dass** das Nickgelenk (38) das Wankgelenk (40) aufnimmt.

5. Aus mehreren Fahrzeugteilen kuppelbares Gelenkfahrzeug nach einem oder mehreren der voranstehenden Ansprüche,
**dadurch gekennzeichnet,**
**dass** das Wankgelenk (40) ein Wankgelenkgehäuse (45) aufweist, wobei das Nickgelenk (38) am Wankgelenkgehäuse (45) angreift.

6. Aus mehreren Fahrzeugteilen kuppelbares Gelenkfahrzeug nach einem oder mehreren der voranstehenden Ansprüche,
**dadurch gekennzeichnet,**
**dass** das Wankgelenkgehäuse (45) zwei seitlich abgehende Nickachsstummel (41) des Nickgelenks (38) aufweist.

7. Aus mehreren Fahrzeugteilen kuppelbares Gelenkfahrzeug nach einem oder mehreren der voranstehenden Ansprüche,
**dadurch gekennzeichnet,**
**dass** das Wankgelenk (40) mit dem Knickgelenk (51) durch einen Gelenkträger (50) verbunden ist.

8. Aus mehreren Fahrzeugteilen kuppelbares Gelenkfahrzeug nach einem oder mehreren der voranstehenden Ansprüche,
**dadurch gekennzeichnet,**
**dass** der Gelenkträger (50) ein Dämpfungselement (60) aufweist, das mit dem Kupplungsträger (30) verbunden ist.

9. Aus mehreren Fahrzeugteilen kuppelbares Gelenkfahrzeug nach einem oder mehreren der voranstehenden Ansprüche,
**dadurch gekennzeichnet,**
**dass** zwischen den Fahrzeugteilen (1, 2) über der Gelenkeinrichtung eine Übergangsplattform (21) vorgesehen ist.

10. Aus mehreren Fahrzeugteilen kuppelbares Gelenkfahrzeug nach einem oder mehreren der voranstehenden Ansprüche,
**dadurch gekennzeichnet,**
**dass** die Übergangsplattform (21) einen Drehteller (21 a) aufweist.

11. Aus mehreren Fahrzeugteilen kuppelbares Gelenkfahrzeug nach einem oder mehreren der voranstehenden Ansprüche,
**dadurch gekennzeichnet,**
**dass** der Drehteller (21 a) an mindestens dem Kupplungsträger (30) befestigt ist.

12. Aus mehreren Fahrzeugteilen kuppelbares Gelenkfahrzeug nach einem oder mehreren der voranstehenden Ansprüche,
**dadurch gekennzeichnet,**
**dass** der Drehteller (21 a) auf dem Gelenkträger (50) durch Arme abgestützt gleitend gehalten ist.

13. Aus mehreren Fahrzeugteilen kuppelbares Gelenkfahrzeug nach einem oder mehreren der voranstehenden Ansprüche,
**dadurch gekennzeichnet,**
**dass** sich die Kupplungsmittel (25) im Bereich der Mittellängsachse des Gelenkfahrzeugs an dem Kupplungsträger (30) befinden.

14. Aus mehreren Fahrzeugteilen kuppelbares Gelenkfahrzeug nach einem oder mehreren der voranstehenden Ansprüche,
**dadurch gekennzeichnet,**
**dass** zu beiden Seiten der Kupplungsmittel (25) an dem Kupplungsträger (30) weibliche und männliche Kupplungsglieder (26, 27, 28, 29) für Strom-, Druckluft- und/oder Hydraulikleitungen vorgesehen sind.

15. Aus mehreren Fahrzeugteilen kuppelbares Gelenkfahrzeug nach einem oder mehreren der voranstehenden Ansprüche,
**dadurch gekennzeichnet,**
**dass** das Fahrzeugteil (1, 2) im Bereich des Bodens eine Einschuböffnung (10, 20) zur Aufnahme des Gelenks (20) aufweist.

16. Aus mehreren Fahrzeugteilen kuppelbares Gelenkfahrzeug nach einem oder mehreren der voranstehenden Ansprüche,
**dadurch gekennzeichnet,**
**dass** die Einschuböffnung einen Einschubrahmen aufweist.

17. aus mehreren Fahrzeugteilen kuppelbares Gelenkfahrzeug nach einem oder mehreren der voranstehenden Ansprüche,
**dadurch gekennzeichnet,**
**dass** der Kuppelrahmen (12) einen den Kuppelrahmen (12) umlaufend umgebenden Montagerahmen (11) aufweist, der der Befestigung des Balges (13) dient.

18. Aus mehreren Fahrzeugteilen kuppelbares Gelenkfahrzeug nach einem oder mehreren der voranstehenden Ansprüche,
**dadurch gekennzeichnet,**
**dass** der Montagerahmen (11) im Dachbereich des Balges (13) in der Mittellängsachse des Gelenkfahrzeugs männliche und weibliche Kupplungsglieder (24) für Strom-, Druckluft- und/oder Hydraulikleitungen aufweist.

19. Aus mehreren Fahrzeugteilen kuppelbares Gelenkfahrzeug nach einem oder mehreren der voranstehenden Ansprüche,
**dadurch gekennzeichnet,**
**dass** die offene Stirnseite des Fahrzeugteils (1, 2) verschließbar ist.

## Claims

1. Articulated vehicle able to be formed by coupling several vehicle parts (1, 2), wherein each vehicle part (1, 2) has at least two axles and a coupling frame (12) connected by a bellows (13) with the vehicle part (1, 2), wherein a respective articulation device (20, 31) is provided between vehicle part (1, 2) and coupling frame (12), wherein the articulation device (20, 31) comprises a coupling carrier (30) disposed approximately in the plane of the coupling frame (12), wherein the coupling carrier (30) comprises at least coupling means (25) for coupling with the articulation device (20, 31) of the other vehicle part (1, 2), wherein the articulation device (31) comprises a plurality of bearings (38, 40, 51), wherein each bearing enables movement in at least one spatial direction, wherein the bearings (38, 40, 51) are connected together, and wherein a roll joint (40) with an axis extending parallel to the vehicle longitudinal axis is arranged at the chassis of the vehicle (1, 2), **characterised in that** the roll joint (40) comprises a rotary element (48) mounted in the roll joint housing (45) to be rotatable through a predeterminable rotational angle in an elastomeric body (49) against a force.

2. Articulated vehicle able to be formed by coupling several vehicle parts according to claim 1, **characterised in that** an articulation joint (51) with a vertical axis is arranged at the coupling carrier (30).

3. Articulated vehicle able to be formed by coupling several vehicle parts according to one or more of the preceding claims, **characterised in that** at least one pitch joint (38) with a pitch axis extending parallel to the vehicle transverse axis is provided at the chassis of the vehicle part (1, 2).

4. Articulated vehicle able to be formed by coupling several vehicle parts according to one or more of the preceding claims, **characterised in that** the pitch joint (38) receives the roll joint (40).

5. Articulated vehicle able to be formed by coupling several vehicle parts according to one or more of the preceding claims, **characterised in that** the roll joint (40) comprises a roll joint housing (45), wherein the pitch joint (38) engages the roll joint housing (45).

6. Articulated vehicle able to be formed by coupling several vehicle parts according to one or more of the preceding claims, **characterised in that** the roll joint housing (45) has two laterally protruding pitch stub axles (41) of the pitch joint (38).

7. Articulated vehicle able to be formed by coupling several vehicle parts according to one or more of the preceding claims, **characterised in that** the roll joint (40) is connected with the pitch joint (51) by a joint carrier (50).

8. Articulated vehicle able to be formed by coupling several vehicle parts according to one or more of the preceding claims, **characterised in that** the joint carrier (50) comprises a damping element (60) which is connected with the coupling carrier (30).

9. Articulated vehicle able to be formed by coupling several vehicle parts according to one or more of the preceding claims, **characterised in that** a transfer platform (21) over the articulation device is provided between the vehicle parts (1, 2).

10. Articulated vehicle able to be formed by coupling several vehicle parts according to one or more of the preceding claims, **characterised in that** the transfer platform (21) comprises a turntable (21 a).

11. Articulated vehicle able to be formed by coupling several vehicle parts according to one or more of the preceding claims, **characterised in that** the turntable (21 a) is fastened to at least the coupling carrier (30).

12. Articulated vehicle able to be formed by coupling several vehicle parts according to one or more of the preceding claims, **characterised in that** the turntable (21 a) is mounted on the joint carrier (50) to be slidingly supported by arms.

13. Articulated vehicle able to be formed by coupling several vehicle parts according to one or more of the preceding claims, **characterised in that** the coupling means (25) are disposed at the coupling carrier (30) in the region of the centre longitudinal axis of the articulated vehicle.

14. Articulated vehicle able to be formed by coupling several vehicle parts according to one or more of the preceding claims, **characterised in that** female and male coupling elements (26, 27, 28, 29) for power, compressed-air and/or hydraulic lines are provided at the coupling carrier (30) on both sides of the coupling means (25).

15. Articulated vehicle able to be formed by coupling several vehicle parts according to one or more of the preceding claims, **characterised in that** the vehicle part (12) has in the region of the floor an insertion opening (10, 20) for reception of the joint (20).

16. Articulated vehicle able to be formed by coupling several vehicle parts according to one or more of the preceding claims, **characterised in that** the insertion opening has an insertion frame.

17. Articulated vehicle able to be formed by coupling several vehicle parts according to one or more of the preceding claims, **characterised in that** the coupling frame (12) has a mounting frame (11) which surrounds the coupling frame (12) in encircling manner and serves for fastening the bellows (13).

18. Articulated vehicle able to be formed by coupling several vehicle parts according to one or more of the preceding claims, **characterised in that** the mounting frame (11) has male and female coupling elements (24) for power, compressed-air and/or hydraulic lines in the roof region of the bellows (13) in the centre longitudinal axis of the articulated vehicle.

19. Articulated vehicle able to be formed by coupling several vehicle parts according to one or more of the preceding claims, **characterised in that** the open end of the vehicle part (1, 2) is closable.

## Revendications

1. Véhicule articulé formé de plusieurs parties de véhicule (1, 2) couplées, dans lequel chaque partie de véhicule (1, 2) comporte au moins deux essieux et un cadre d'accouplement (12) qui est relié à la partie de véhicule (1, 2) par un soufflet (13), dans lequel un dispositif d'articulation (20, 31) est prévu à chaque fois entre la partie de véhicule (1, 2) et le cadre d'accouplement (12), le dispositif d'articulation (20, 31) comportant un support d'attelage (30) qui se trouve à peu près dans le plan du cadre d'accouplement (12), dans lequel le support d'attelage (30) comporte au moins des moyens d'attelage (25) pour s'atteler au dispositif d'articulation (20, 31) de l'autre partie de véhicule (1, 2), dans lequel le dispositif d'articulation (31) comprend plusieurs paliers (38, 40, 51), chaque palier permettant un déplacement dans au moins une direction de l'espace, les paliers (38, 40, 51) étant reliés entre eux, et une articulation de roulis (40) qui comporte un axe orienté dans la direction longitudinale du véhicule étant agencée sur le châssis du véhicule (1, 2),
**caractérisé en ce que**
l'articulation de roulis (40) comporte, à l'intérieur du carter (45) de
l'articulation de roulis, un élément tournant (48) monté dans un corps en élastomère (49) pour pouvoir tourner d'un angle de rotation prédéterminé à l'encontre d'une force.

2. Véhicule articulé formé de plusieurs parties de véhicule couplées selon la revendication 1,
**caractérisé en ce que**
une articulation de lacet (51) comportant un axe vertical est disposée sur le support d'attelage (30).

3. Véhicule articulé formé de plusieurs parties de véhicule couplées selon l'une ou plusieurs des revendications précédentes,
**caractérisé en ce que**,
sur le châssis de la partie de véhicule (1, 2), est prévue au moins une articulation de tangage (38) comportant un axe de tangage orienté parallèlement à l'axe transversal du véhicule.

4. Véhicule articulé formé de plusieurs parties de véhicule couplées selon l'une ou plusieurs des revendications précédentes,
**caractérisé en ce que**
l'articulation de tangage (38) porte l'articulation de roulis (40).

5. Véhicule articulé formé de plusieurs parties de véhicule couplées selon l'une ou plusieurs des revendications précédentes,
**caractérisé en ce que**
l'articulation de roulis (40) comporte un carter (45) d'articulation de roulis, l'articulation de tangage (38) attaquant le carter (45) d'articulation de roulis.

6. Véhicule articulé formé de plusieurs parties de véhicule couplées selon l'une ou plusieurs des revendications précédentes,
**caractérisé en ce que**
le carter (45) d'articulation de roulis comporte deux tourillons d'axe de tangage (41) appartenant à l'articulation de tangage (38).

7. Véhicule articulé formé de plusieurs parties de véhicule couplées selon l'une ou plusieurs des revendications précédentes,
**caractérisé en ce que**
l'articulation de roulis (40) est reliée à l'articulation de lacet (51) par un support d'articulation (50).

8. Véhicule articulé formé de plusieurs parties de véhicule couplées selon l'une ou plusieurs des revendications précédentes,
**caractérisé en ce que**
le support d'articulation (50) comporte un élément amortisseur (60) qui est relié au support d'attelage (30).

9. Véhicule articulé formé de plusieurs parties de véhicule couplées selon l'une ou plusieurs des revendications précédentes,
**caractérisé en ce que**,
une plate-forme d'intercirculation (21) est prévue au-dessus du dispositif d'articulation, entre les parties de véhicule (1, 2).

10. Véhicule articulé formé de plusieurs parties de véhicule couplées selon l'une ou plusieurs des revendications précédentes,
**caractérisé en ce que**
la plate-forme d'intercirculation (21) comporte une plaque-tournante (21 a).

11. Véhicule articulé formé de plusieurs parties de véhicule couplées selon l'une ou plusieurs des revendications précédentes,
**caractérisé en ce que**
la plaque tournante (21 a) est fixée au moins au support d'attelage (30).

12. Véhicule articulé formé de plusieurs parties de véhicule couplées selon l'une ou plusieurs des revendications précédentes,
**caractérisé en ce que**
la plaque-tournante (21 a) est maintenue supportée par le support
d'articulation (50) avec possibilité de glissement au moyen de bras.

13. Véhicule articulé formé de plusieurs parties de véhicule couplées selon l'une ou plusieurs des revendications précédentes,
**caractérisé en ce que**
les moyens d'attelage (25) sont attachés au support d'attelage (30)
dans la région de l'axe médian longitudinal du véhicule articulé.

14. Véhicule articulé formé de plusieurs parties de véhicule couplées selon l'une ou plusieurs des revendications précédentes,
**caractérisé en ce que,**
des deux côtés des moyens d'attelage (25), sont prévus, sur le support d'attelage (30), des organes de raccordement mâles et femelles (26, 27, 28, 29) pour des canalisations électriques, pneumatiques et hydrauliques.

15. Véhicule articulé formé de plusieurs parties de véhicule couplées selon l'une ou plusieurs des revendications précédentes,
**caractérisé en ce que**
la partie de véhicule (1, 2) comporte, dans la région du plancher, une ouverture d'insertion(10, 20) destinée à recevoir l'articulation (20).

16. Véhicule articulé formé de plusieurs parties de véhicule couplées selon l'une ou plusieurs des revendications précédentes,
**caractérisé en ce que**
l'ouverture d'insertion comporte un cadre d'insertion.

17. Véhicule articulé formé de plusieurs parties de véhicule couplées selon l'une ou plusieurs des revendications précédentes,
**caractérisé en ce que**
le cadre d'accouplement (12) comporte un cadre de montage (11)
qui entoure le cadre d'accouplement (12) sur tout le tour et qui sert à la fixation du soufflet (13).

18. Véhicule articulé formé de plusieurs parties de véhicule couplées selon l'une ou plusieurs des revendications précédentes,
**caractérisé en ce que,**
dans la région du toit du soufflet (13), le cadre de montage (11) comporte, dans l'axe longitudinal médian du véhicule articulé, des organes de raccordement mâles et femelles (24) pour des canalisations électriques, pneumatiques et/ou hydrauliques.

19. Véhicule articulé formé de plusieurs parties de véhicule couplées selon l'une ou plusieurs des revendications précédentes,
**caractérisé en ce que**
le côté frontal ouvert de la partie de véhicule (1, 2) peut être fermé.
